# EUROPÄISCHE PATENTANMELDUNG

(11) **EP 0 761 777 A1**
(43) Veröffentlichungstag der Anmeldung: **12.03.1997**
(21) Anmeldenummer: 96112766.9
(22) Anmeldetag: 07.08.1996
(51) Int. Cl.: C09D 5/08, C09D 5/00, C09D 4/00

(54) **Verfahren zur Herstellung einer Korrosionsschutzschicht auf Bronze und/oder bronzehaltigen Gegenständen**

(30) Priorität: 22.08.1995 DE 19530836
(71) Anmelder: Frauenhofer-Gesellschaft zur Förderung der angewandten Forschung e.V., D-80636 München (DE)
(72) Erfinder: Pilz, Monika, Dr., 97271 Kleinrinderfeld (DE); Römich, Hannelore, Dr., 97082 Würzburg (DE)
(74) Vertreter: Pfenning, Meinig & Partner

(57) **Zusammenfassung**

Die Erfindung betrifft ein Verfahren zur Herstellung einer Korrosionsschutzschicht auf bronze- und/oder bronzehaltigen Gegenständen, bei dem mindestens eine Schutzschicht, hergestellt aus einem organisch vernetzbaren organofunktionellen Silan mit einem organisch nicht vernetzbaren organofunktionellen Silan, auf der Oberseite des Gegenstandes aufgebracht wird.

## Beschreibung

Die Erfindung betrifft ein Verfahren zur Herstellung einer Korrosionsschutzschicht auf Bronze - und/oder bronzehaltigen Gegenständen, bei dem eine Schutzschicht aus einem Polykondensationsprodukt aus organofunktionellen Silanen aufgebracht wird.

Kunstobjekte und Kulturgüter, die im Freien der Witterung ausgesetzt sind, erleiden im Laufe der Zeit Schäden, die auf Umwelteinwirkungen zurückzuführen sind. Besonders Metallobjekte, wie beispielsweise Bronzedenkmäler, zeigen dichte, schwarze Korrosionskrusten, die die ehemals meist grüne Patinaschicht kaum noch erahnen lassen. Es sind vor allem die Schmutzkrusten, die mit Schadstoff beladen auf der Oberfläche der Objekte aufliegen und zu Korrosionen führen, die einen fortschreitenden Materialverlust nach sich ziehen. Die Reinigung historischer Bronzeskulpturen wird somit zur häufigen denkmalpflegerischen Maßnahme. Die Entwicklung von Schutzkonzepten bietet eine vielversprechende Möglichkeit der Konservierung und Restaurierung und wirkt somit diesem zeit- und personalintensivem Pflegeaufwand entgegen. Durch den Einsatz von langzeitwirksamen Oberflächenschutzmitteln, die nicht nur eine rasche Verschmutzung verhindern bzw. eine leichtere Reinigung ermöglichen, sondern auch einen zusätzlichen Korrosionsschutz garantieren, wird die Erhaltung von Metallobjekten wesentlich erleichtert.

Zur Konservierung von Metallobjekten im Freien wurden in den letzten 30 Jahren, neben traditionell verwendeten Wachsen und Ölen, auch organische Polymere zum Oberflächenschutz eingesetzt, die auf ihre Brauchbarkeit für diesen speziellen Anwendungszweck geprüft wurden. Das umfangreiche Anforderungsprofil für solche Materialien reicht von guten Haftungs- und Imprägnierungseigenschaften und Sperrwirkung gegenüber Wasserdampf und Schadgasen über Witterungs- und Alterungsbeständigkeit und Langzeitkorrosionsschutzwirkung bis hin zur Wiederabnahme (Reversibilität) nach Alterung.

Wachse und auch Öle erweisen sich nur bei regelmäßiger Anwendung als geeignet. Es wird von der Denkmalpflege empfohlen, die Reinigung und Oberflächenbehandlung mindestens einmal im Jahr zu wiederholen.

Organische Polymere, wie Epoxid- oder Acrylharze, die industriell in großtechnischer Produktion hergestellt werden und vereinzelt in der Konservierungs-und Restaurierungspraxis ohne entsprechende anwendungsspezifische Modifizierung Einsatz gefunden haben, zeichnen sich nur durch eine relativ kurzzeitige Wirksamkeit aus. Besonders Polyacrylate neigen mit zunehmender Alterung zur Vergilbung und werden spröde. Dieses führt zu teilweise großflächigen Haftungsverlusten, so daß auch hier in absehbaren Zeitabständen die Oberflächenbehandlung zu erneuern ist.

Das speziell für den Schutz von Bronzeskulpturen entwickelte und in englisch-sprachigen Ländern kommerziell erhältliche Produkt Incralac, ein benzotriazolhaltiges Acrylharz (Paraloid B76, gelöst in Toluol) bewährte sich in Labortests. Der Zusatz des gesundheitsschädlichen (reizende Wirkung) BTA (Benzotriazol) war allerdings zur Erhöhung der Effizienz (Langzeitschutzwirkung) dieses Konservierungssystems notwendig. Demnach zeigt auch diese Beschichtung bei großflächiger Anwendung gemäß Langzeitbeobachtung (z. Zt. bis zu 13 Jahren) im Freien an exponierten Kanten, an denen der Lackauftrag erwartungsgemäß dünner ist, ein Nachdunkeln bzw. eine Schwarzfärbung der behandelten Metalloberfläche.

Von Überzügen auf der Basis von Siliconharzen ist ebenso bekannt, daß sie aufgrund von Alterungsprozessen rasch an Wirksamkeit verlieren, besonders, wenn das behandelte Kunstobjekt aus Bronze relativ feuchten Bedingungen (z.B. ein Springbrunnen) ausgesetzt ist.

Aus der DE 4 303 570 ist ein Schutzsystem bekannt, auf der Basis von im Sol-Gel-Verfahren herzustellenden, speziell auf Haftung zu Glasoberflächen hin optimierten anorganisch-organischen Copolymeren (ORMOCERe). Dieses verwendete ORMOCER trocknet bei Raumtemperatur ohne einen zusätzlichen Härter durch Verdampfen des Lösungsmittels. Es handelt sich dabei, wie in der Denkmalpflege gefordert, um eine wiederabnehmbare (= reversible) Beschichtung, die sich in organischen Lösungsmitteln löst. Allerdings wird eine ausreichende Schutzwirkung nur durch zusätzlichen Einbau von anorganischen Sperrpartikeln (glass flakes) erreicht.

Es ist weiter bekannt, diese ORMOCERe auch als Schutzschicht für Bronzestatuen einzusetzen (Surface treatments: cleaning, stabilization and coatings, Preprints, Kopenhagen, 7-11.09.1994). Danach wird vorgeschlagen, mit einem speziellen, vernetzungsfähigen epoxyfunktionellen Alkoxysilan, nämlich mit 3-Glycidoxypropyltrimetoxysilan eine Schutzschicht herzustellen. Es hat sich jedoch gezeigt, daß diese Schutzschichten noch keine befriedigende Eigenschaften in Bezug auf den Korrosionsschutz und insbesonders in Bezug auf die Reversibilität der Schutzschicht liefern.

Aufgabe der vorliegenden Erfindung ist es daher, ausgehend vom vorstehend diskutierten Stand der Technik ein Verfahren vorzuschlagen, das es erlaubt, einen verbesserten Korrosionsschutz und eine verbesserte Reversibilität einer Beschichtung zu realisieren.

Die Aufgabe wird durch die kennzeichnenden Merkmale des Anspruches 1 gelöst. Die Unteransprüche zeigen vorteilhafte Weiterbildungen auf.

Erfindungsgemäß wird somit vorgeschlagen, die Schutzschicht nach einem ganz bestimmten Verfahrensablauf aufzubringen. In einer ersten Verfahrensstufe wird ein Vorkondensat hergestellt, aus 30 bis 40 mol% eines organisch nicht vernetzbaren organofunktionellen Silans, mit 60 bis 70 mol% eines organisch vernetzbaren organofunktionellen Silans. Wesentlich bei der ersten Verfahrensstufe ist, daß die vorstehend definierten Bereiche für die angeführten Komponenten exakt eingehalten werden. Durch den ungewöhnlich hohen Anteil des nichtvernetzbaren oragnofunktionellen Silans der allgemeinen Formel I (Netzwerkwandler) im Verhältnis zum vernetzbaren organofunktionellen Silan der allgemeinen Formel II (Netzwerkbildner), das etwa im Verhältnis Netzwerkbildner zu Netzwerkwandler von zirka 2 : 1 liegt, wird die Reversibilität der als Konservierungsmaßnahme eingesetzten Beschichtung gewahrt. Die Polymerisation der organischen Gruppierungen wird somit gehindert und dadurch der Vernetzungsgrad des entstehenden polymeren Netzwerkes herabgesetzt. Durch die Kombination der erfindungsgemäß vorgeschlagenen organischen Silane konnte die Oberflächenpolarität des Copolymers gering gehalten werden (hydrophobe Eigenschaften, geringe Benetzung durch Feuchtigkeit) und somit die Wetterbeständigkeit sowie der Korrosionschutz deutlich gegenüber den bisherigen Schutzschichten des Standes der Technik erhöht werden.

Erfindungsgemäß ist in dem nicht vernetzbaren organofunktionellen Silan der allgemeinen Formel I R'Aryl, X = OH, Cl oder Alkoxy und p = 1 - 3. Es hat sich gezeigt, daß bei den organofunktionellen Silanen der allgemeinen Formel I insbesonders Diphenylsilandiol bevorzugt ist.

In den organisch vernetzbaren organofunktionellen Silanen der allgemeinen Formel II ist

R''ₘ(R'''Y)ₙSiX₍₄₋ₘ₋ₙ₎

worin R'' Alkyl, Alkenyl, Aryl, Alkylaryl, Arylalkyl, Alkenylaryl, Arylalkenyl,
und
R''' Alkylen, Alkenylen, Arylen, Alkylarylen, Arylalkylen, Alkenylarylen, Arylalkenylen,
ist und
R'' und R''' unterbrochen sein können durch O, S oder -NH-,
und
X = H, Halogen, Hydroxy, Alkoxy, Acyloxy oder -NR₂, wobei R = H oder Alkyl ist
und
Y = eine polymerisierbare Gruppe,
und
m und n ganze Zahlen von 0 bis 3, und
m + n von 1 bis 3 sind

Bei dem organofunktionellen Silan der allgemeinen Formel II ist besonders bevorzugt, wenn dieses ein epoxyfunktionelles Silan, hier besonders bevorzugt γ-Glycidoxypropyltrimethoxysilan (GLYMO) oder ein methacrylatfunktionelles Silan, hier besonders bevorzugt 3-Methacryloxypropyltrimethoxysilan (MEMO) ist. Insbesondere durch die Kombination von GLYMO mit Arylsilanen wie z.B. Diphenylsilandiol als Netzwerkwandler konnte insbesondere, wie vorstehend erwähnt, die Oberflächenpolarität des Copolymers äußerst gering gehalten werden.

Die bei der Herstellung bereits vorkondensierten Heteropolysiloxan-Lösungen, insbesondere die aus epoxyfunktionellen Silanen, insbesondere die mit γ-Glycidoxypropyltrimethoxysilan synthetisierten Lacke lassen sich mit einem geeigneten Härter auf der Basis von Aminosilanen, das in unter stöchiometrischer Menge (0,1 - 50 mol%) zugesetzt wird, schon vor der Applikation in einer verdünnten, angemischten Beschichtungslösung gezielt vorpolimerisieren. Es hat sich gezeigt, daß dabei dieser Härter auch als Katalysator wirkt. Als Härter ist N-2-Aminoethyl-3-aminopropyltriethoxysilan, Diethylentetramin oder Aminopropyltriethoxysilan geeignet. Der weitere Aufbau des anorganischen Netzwerks erfolgt somit bereits bei Raumtemperatur und auch die organische Vernetzung wird überraschenderweise vorwiegend bei Raumtemperatur eingeleitet. Ergänzend ist es vorgesehen, daß entweder beim Verfahrensschritt a) und/oder b) bis zu 10 mol% eines Vernetzers der allgemeinen Formel III MR₄, M = Si, Zr oder Al und R₄ = Alkoxy insbesondere Methoxy oder Isopropoxy zugegeben wird. Dadurch wird eine gezielte Verbesserung des Netzwerkaufbaus erreicht.

Eine weitere bevorzugte Ausführungsform (Patentanspruch 4, 5 sowie 6) sieht nun vor, daß entweder beim Verfahrensschritt c) ein organisches Oligomer zugesetzt wird oder nach dem Verfahrensschritt d), d.h. nach Aufbringen der Schicht mindestens eine zusätzliche Schicht aus einem organischen Oligomer aufgebracht wird. Erfindungsgemäß ist es somit möglich, ein Schutzkonzept mit dem organischen Oligomer in einem Einschichtsystem oder in einem Mehrschicht-, bevorzugt in einem Zweischichtsystem (Patentanspruch 5) aufzubauen. Das organische Oligomer ist bevorzugt ein Copolymer aus Ethylenmethacrylat und Methylacrylat. Ein derartiges Produkt ist z.B. kommerziell im Handel erhältlich unter der Bezeichnung Paraloid B72.

Die zugefügten organischen Oligomere, dienen insbesondere zur Stabilisierung des organischen Netzwerks. Sie setzen zusätzlich auch die Sprödigkeit des glasartigen anorganischen Netzwerkes herab. Dadurch wird trotz überraschend hoher Schutzwirkung ein niedriger Vernetzungsgrad ermöglicht, der eine wichtige Voraussetzung für den Einsatz der erfindungsgemäßen Schutzschicht im Konservierungsbereich ist. Die geforderte Reversibilität jeder, in die Geschichte eines Kunstwerks eingreifenden Konservierungsmaßnahme, bleibt damit langfristig gewahrt. Die Beschichtungen können mit organischen Lösungsmitteln wieder entfernt werden. In vereinzelten Fällen können bei Bedarf noch wirksamere mechanische Methoden eingesetzt werden. Daß diese Kombination von Reversibilität, praxisrelevanten Trocknungs- und Härtungsverhalten bei Raumtemperatur sowie ausgezeichneter Alterungsbeständigkeit der Schutzschicht bei gleichzeitig sehr gutem Konservierungsverhalten für patinierte Bronzesubstrate möglich war, konnte nicht aus dem Stand der Technik abgeleitet werden, sondern erschien auch in Fachkreisen als nicht möglich. Die erfindungsgemäßen Beschichtungen können darüberhinaus zur Erhöhung der mechanischen Festigkeit und Beanspruchbarkeit sowie zur Verringerung der Staubanfälligkeit mit einer zweiten Schicht eines organischen Polymers, das durch den organischen Bestandteil der erfindungsgemäßen Beschichtung optimale Haftungsvoraussetzungen hat, kombiniert werden. Die im Vergleich zu organischen Polymeren bessere Beständigkeit des neuen Systems zeigt sich z.B. auch im Schwitzwassertest (keine visuelle Veränderung der Beschichtung).

Das erfindungsgemäße Verfahren umfaßt somit ein neuartiges Schutzkonzept für die Konservierung von Metallobjekten im Freien, das auf anorganisch-organischen Copolymeren aufbaut. Somit werden Eigenschaften von anorganischen (gute Haftung auf anorganischen Substratoberflächen) als auch von organischen (Elastizität, Reversibilität) Werkstoffen miteinander vereint. Diese Werkstoffklasse baut auf einem silicatischen Netzwerk auf, das von einer zusätzlichen organischen Polymerstruktur nach Aushärtung durchdrungen und somit modifiziert wird.

Da der Patinabelag, z.B. bei Bronzeskulpturen hauptsächlich aus basischen Kupfersulfaten und -carbonaten (Brochantit, Anthlerit etc.) bestehend, und auch die blanke Metalloberfläche, häufig mit einem Oxidfilm belegt sind, bieten diese Flächen optimale Voraussetzungen für eine kovalente Anbindung der im Sol-Gel-Verfahren herzustellenden Heteropolysiloxane. Dadurch ist eine sehr gute Haftfestigkeit gegeben, die sich auf den Korrosionsschutz selbst unter widrigen Witterungsbedingungen bzw. an unvorteilhaften (z.B. da stark beansprucht, gewölbt oder trichterförmig angeordnet) Skulpturformen positiv auswirkt (Naßhaftung). Bei organischen Polymeren dagegen beruht der Haftungsmechanismus der Beschichtung zu einer Metall- oder Patinaoberfläche allein auf einer physikalischen Verzahnung des Überzugs. Unter feuchten Bedingungen kommt es daher an der Grenzfläche Beschichtung - Patina bzw. Metall zur Kondensation des durch die Beschichtung diffundierenden Wasserdampfes, die dann umgehend eine großflächige Ablösung der Beschichtung verursacht.

Das erfindungsgemäße Schutzkonzept läßt sich z.B. mit Hilfe einer druckluftbetriebenen Sprühapparatur großflächig auf die Bronzeoberfläche applizieren oder mit einem Pinsel z.B. an unvorteilhaft angeordneten Skulpturformen auftragen. Das Beschichtungsmaterial kann auch unter Zusatz - wie vorstehend erläutert - eines speziellen Härters eingesetzt werden (Topfzeit ca. 7 Tage; je nach Verdünnung) und härtet dann nach dem Auftragen bei Raumtemperatur innerhalb von 2 - 8 Stunden (abh. von den Witterungsbedingungen: Feuchte, Temperatur, Windstärke) zu einer griffesten Korrosionsschutzbehandlung aus, die auch nach zahlreichen, beschleunigten Bewitterungszyklen mit organischen Lösungsmitteln reversibel bleibt.

Durch die niedrige Viskosität der mit hochsiedenden Lösungsmitteln (z.B. Butoxyethanol) verdünnten und während der Synthese 2nur vorkondensierten (kleine Partikelgrößen lt. Molekulargewichtsverteilung) erfindungsgemäßen Lösung wird ein optimales Eindringvermögen in die poröse Patina- bzw. Metall(-oxid)-Struktur (bei gegossenen Bulkformen offene Porosität) ermöglicht. Die Kapillar-Sogwirkung fördert das Imprägnieren der Skulpturoberfläche mit dem anorganisch-organischen Beschichtungsmaterial, das bis zum Metall-Patina-(bzw. Metall-Oxid-) Grenzbereich eindringen kann. Die chemische Anbindung des neuen Schutzsystems an die Kappilarwände verhindert ein Zurückweichen des Materials, sodaß nach langsamem Verdampfen des hochsiedenden Lösungsmittels keine Hohlräume entstehen, sondern eine mit Beschichtung gesättigte Patina als dichte Versiegelung der Metalloberfläche zurückbleibt. Die Applikation der Beschichtung kann sooft wiederholt werden, bis das Beschichtungsmaterial den Patinabelag auffüllt (Entstehen eines "Naßeffekts").

Die erfindungsgemäße Beschichtung kann, wie vorstehend erläutert, auch als effizientes Zwei-Schicht-Schutzsystem an Bronzestatuen bei Standorten eingesetzt werden, die eine hohe Staubbelastung oder eine starke mechanische Beanspruchung aufweisen. Durch die Kombination von zwei Systemen (Schutzschicht - Acrylharz-Deckschicht) kann ein als erste Schicht aufgetragenes System mit optimaler Haftung den effektiven Korrosionschutz bewirken, während ein als zweite Schicht (Deckschicht) verwendetes benzotriazolfreies Acrylharz die mechanische Belastbarkeit der Konservierungsmaßnahme sicherstellt. Durch unterschiedliche Reversibilitätseigenschaften beider Beschichtungsmaterialien wird es möglich, die zweite Schicht nach einer Beschädigung (durch Kratzer) oder großflächiger Ablösung von der ersten Schicht mit Lösungsmitteln zu entfernen und zu erneuern (Opferschicht), ohne daß der wirksame Korrosionsschutz durch die darunterliegende Schutzschicht verloren geht.

Die verbesserte Haftfestigkeit des neuen Schutzkonzeptes für die Metallkonservierung gegenüber den handelsüblichen organischen Polymeren wirkt sich besonders in Langzeitbewitterungstests positiv aus. Während die organischen Polymerbeschichtungen zunächst eine vergleichbare gute Haftung auf der Metalloberfläche wie die anorganisch-organischen Beschichtungssysteme zeigen, bleibt die Haftung der erfindungsgemäßen Schicht mit zunehmender Alterung durch Umwelteinflüsse überraschend stabil. Im Gegensatz dazu nimmt die Haftung der organischen Beschichtungen rapide ab. Die Versprödung und nachfolgende Beschädigungen an diesen gealterten Beschichtungen ziehen großflächige Abplatzungen der Beschichtung oder Unterwanderung der Beschichtung durch fortschreitende Korrosion nach sich. Die somit ständig zu wiederholenden Konservierungsmaßnahmen sind zum einen kostspielig, zum anderen als regelmäßiger Eingriff vom konservatorischen Standpunkt nicht zu vertreten.

Die neuartige Beschichtung bietet bei vergleichbarem Schutz für Metalle gegenüber Korrosionsanfälligkeit somit eine langlebigere Schutzwirkung, da die sehr gute Haftung während der Alterung bestehen bleibt. Eine Beschädigung der Beschichtung wird hier nicht durch nachträgliche Folgeerscheinungen erhöht, so daß ein erneutes Intervenieren durch eine erforderliche Konservierungsmaßnahme im Sinne des Kunstwerkes noch weit hinausgezögert werden kann. Bei der Simulation von Bedingungen mit sehr hoher Feuchte (Schwitzwassertest, kondensierte Feuchtigkeit bei hoher Temperatur) zeigt sich die neue erfindungsgemäße Beschichtung sehr stabil und resistent. Während die organischen Polymerbeschichtungen nicht nur einen Haftungsverlust, sondern auch eine optische Veränderung der Beschichtung (Eintrübung, milchiger Belag) aufweisen, bleiben die erfindungsgemäßen Schichten in ihren Eigenschaften und im Aussehen unverändert.

Die Erfindung wird nachfolgend durch ein Beispiel näher erläutert:

### Ausführungsbeispiel:

Das beispielhafte Schutzsystem basiert auf Lacken, die in folgenden Reaktionsschritten hergestellt werden:
(i) Vorkondensation von
   - 30 - 40 mol% R'ₚSiX₄₋ₚ: R'= Phenyl
   X = OH
   "Netzwerkwandler"
   - 60-70 mol% R''ₘ(R'''Y)ₙSiX₍₄₋ₘ₋ₙ₎: R = γ-Glycidoxypropyl oder 3-Methacryloxypropyl
   "Netzwerkbildner"
   - 0-10 mol% MR₄: M = Si, Zr
   R = Methoxy, Isopropoxy
   "Vernetzer"
   ohne Lösungsmittel
   Reaktionstemperatur 0 - 100°C
(ii) Hydrolyse / Kondensation des Vorkondensats mit stöchiometrischer Menge an Wasser
   Reaktionstemperatur 0 - 100°C
   Reaktionszeit 0,5 - 120 h

### Synthese von GDiphenyl

Synthesebeschreibung für eine 0,1 mol-Rezeptur
- 16,54 g (0,07mol.66.7mol%): Glymo (γ-Glycidoxypropyltrimethoxysilan) (Fa. Union Carbide)
- 7,57 g (0.035mol.33.3mol%): Diphenylsilandiol (Fa. ABCR)
- 3.15g (0.275mol.stöchio.): Wasser

In einem 250 ml-Dreihalskolben, der mit einem Rückflußkühler, Thermometer und Tropftrichter ausgestattet wird, werden die Silane in der angegebenen Reihenfolge eingewogen. Die milchig trübe Reaktionsmischung wird 18 Std. bei Raumtemperatur gerührt (Magnetrührer). Innerhalb von 60 Minuten wird die Suspension dann auf ca. 90°C mit Hilfe eines Heizpilzes oder Ölbades aufgeheizt. Das Gemisch wird klar und (ii) ein Viertel der stöchiometrischen Menge an Wasser wird aus dem Tropftrichter in einem Schritt zugegeben, ohne die Heizquelle zu entfernen. Die resultierende Suspension, deren Temperatur bei der Wasserzugabe um ca. 3 - 4°C sinkt, wird bis zur Klärung (ca. 2 Min.) gerührt, anschließend wird in 20-Minuten-Abständen das restliche Wasser in Viertel-Portionen zugefügt. Die Reaktionsmischung wird dabei auf 80 - 85°C gehalten. Nachdem der Lack nach der letzten Wasserzugabe klar geworden ist (nach ca. 15 Min.), wird die Lösung weitere 90 Min. erhitzt (Temperatur ca. 82°C). Die Heizquelle wird entfernt, der Lack langsam auf Raumtemperatur abgekühlt und weitere 18 Std. bei Raumtemperatur gerührt.

Zur Lagerung wird der Lack GDiphenyl 1:2 (Gew.%) mit Butoxyethanol verdünnt. Die Viskosität dieser Lösung liegt bei 5.64 mm²/s (bestimmt mit Ubbelohde-Kapillarviskosimeter bei 20°C).

### Applikation von GDiphenyl

Bei Verwendung als Zwei-Schicht-Schutzsystem OR16 wird der Lack GDiphenyl wie folgt abgemischt:

42.0 g einer 1:2 (Gew.%) mit Butoxyethanol verdünnten GDiphenyl-Lösung wird mit 28.0 g Butoxyethanol weiter verdünnt (resultierende Verdünnung 1:4 Gew.%) und mit 1.199 g N-2-Aminoethyl-3-aminopropyltriethoxysilan (DAMO, 15mol% berechnet auf GLYMO) versetzt. Diese Lösung wird mit einer Sprühspistole (SATA-jet, Druckluft 2 bar) auf die Bronzeoberfläche (z.B. entfettet mit Aceton oder gereinigt mit Wasser) bis zum sichtbaren "Naßeffekt" appliziert. Die resultierende Beschichtung (Trockenzeit bei Raumtemperatur ca. 16 Std.) hat bei einmaligem Auftrag eine Schichtdicke von ca. 4 µm (Schichtdickenmessung an nicht korrodierten, gerollten Bronzeblechen; induktive Methode).

Für ein Zwei-Schicht-Schutzsystem wird nach einer Trockenzeit von 16 Std. als zweite Schicht eine Lösung von Paraloid B 72 (Verdünnung 1:12.5 Gew.%, mit Lösungsmittelgemisch Toluol/Butoxyethanol 3.6:1) mit gleicher Applikationstechnik aufgetragen. Die Schichtdicke des Zwei-Schicht-Schutzsystems liegt bei 10 µm.

Bei Verwendung als Ein-Schicht-Schutzsystem OR1 wird der Lack GDiphenyl wie folgt abgemischt:

13.8. g einer 1:2 (Gew.%) mit Butoxyethanol verdünnten GDiphenyl-Lösung wird mit 23.0 g Butoxyethanol weiter verdünnt (resultierende Verdünnung 1:6 Gew.%), anschließend mit 3.45 g einer Lösung von Paraloid B 72 in Essigester (1:2 Gew.%, Paraloidgehalt: 20 Gew.% berechnet auf den erfindungsgemäßen Lack) gemischt und mit 0.394 g N-2-Aminoethyl-3-aminopropyltriethoxysilan (DAMO) versetzt. Diese Lösung wird mit einer Sprühpistole (SATA-jet, Druckluft 2 bar) auf die Bronzeoberfläche (z.B. entfettet mit Aceton oder gereinigt mit Wasser) bis zum sichtbaren "Naßeffekt" appliziert. Die resultierende Beschichtung (insgesamt Trockenzeit bei Raumtemperatur ca. 16 Std.) hat bei einmaligem Auftrag eine Schichtdicke von ca. 3 µm, bei zweimaligem Auftrag (Zwischentrocknen ca. 3,5 Std.) von ca. 6 µm (Schichtdickenmessung an nicht korrodierten, gerollten Bronzeblechen, induktive Methode).

## Patentansprüche

1. Verfahren zur Herstellung einer Korrosionsschutzschicht auf bronze- und/oder bronzehaltigen Gegenständen, bei dem mindestens eine Schutzschicht, hergestellt aus einem organisch vernetzbaren organofunktionellen Silan mit einem organisch nicht vernetzbaren organofunktionellen Silan, auf der Oberseite des Gegenstandes aufgebracht wird,
dadurch **gekennzeichnet,**
daß die Schutzschicht ein Polykondensationsprodukt enthält, das hergestellt wird durch
a) Vorkondensation von 30 bis 40 mol% eines organisch nicht vernetzbaren organofunktionellen Silans der **allgemeinen Formel I**, 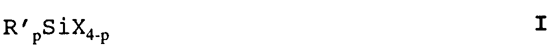 worin R' = Aryl, X = OH, Cl, Alkoxy und p = 1 bis 3 ist, mit 60 bis 70 mol% eines organisch vernetzbaren organofunktionellen Silans der **allgemeinen Formel II**, 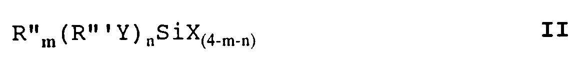 worin R'' Alkyl, Alkenyl, Aryl, Alkylaryl, Arylalkyl, Alkenylaryl, Arylalkenyl,
und
R''' Alkylen, Alkenylen, Arylen, Alkylarylen, Arylalkylen, Alkenylarylen, Arylalkenylen,
ist und
R'' und R''' unterbrochen sein können durch O, S oder -NH-,
und
X = H, Halogen, Hydroxy, Alkoxy, Acyloxy oder -NR₂ wobei R = H oder Alkyl ist
und
Y = eine polymerisierbare Gruppe,
und
m und n ganze Zahlen von 0 bis 3, und
m + n von 1 bis 3 sind
bei einer Reaktionstemperatur von 0 bis 100 °C ohne extern zugesetztes Lösungsmittel,
b) Hydrolyse/Kondensation dieses Vorkondensats mit einer stöchiometrischen Wassermenge bei einer Reaktionstemperatur von 0 bis 100 °C und einer Reaktionszeit von 0,5 bis 120 h,
c) Aufnahme dieses Polykondensationsproduktes in einem organischen Lösungsmittel mit einem Verdünnungsverhältnis (in Gew.-%) von Kondensationsprodukt zu Lösungsmittel von 1 : 0,1 bis 1 : 10, und im Falle von R'' = 3-Glycidoxypropyl Zugabe von 0,1 bis 50 mol% (bezogen auf das Polykondensationsprodukt) eines Aminosilans als Härter,
d) Applikation dieser Lösung auf den Gegenstand in Form mindestens einer Schicht mit einer Schichtdicke von 0,5 bis 20 µm je Schicht.

2. Verfahren nach Anspruch 1,
dadurch gekennzeichnet, daß beim Verfahrensschritt a) bei ca. 90°C gearbeitet wird.

3. Verfahren nach Anspruch 1 oder 2,
dadurch gekennzeichnet, daß beim Verfahrensschritt a) und/oder b) bis zu 10 mol% eines Vernetzers der **allgemeinen Formel III** 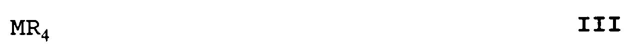 mit M = Si, Zr oder Al und R₄ = Alkoxy insbesonders Methoxy oder Isopropoxy zugegeben wird.

4. Verfahren nach mindestens einem der Ansprüche 1 bis 3,
dadurch gekennzeichnet, daß beim Verfahrensschritt c) ein organisches Oligomer zugesetzt wird.

5. Verfahren nach mindestens einem der Ansprüche 1 bis 4,
dadurch gekennzeichnet, daß nach dem Verfahrensschritt d) mindestens eine zusätzliche Schicht aus einem organischen Oligomer aufgebracht wird.

6. Verfahren nach Anspruch 4 oder 5,
dadurch gekennzeichnet, daß das organische Oligomer ein Copolymer aus Ethylenmethacrylat und Methylacrylat ist in einer Verdünnung von 1 : 20 bis 1 : 10 Gew%, mit einem Lösungsmittelgemisch Toluol/Butoxyethanol.

7. Verfahren nach mindestens einem der Ansprüche 1 bis 6,
dadurch gekennzeichnet, daß als organisch nicht vernetzbares organofunktionelles Silan der allgemeinen Formel I Diphenylsilandiol eingesetzt wird.

8. Verfahren nach mindestens einem der Ansprüche 1 bis 7,
dadurch gekennzeichnet, daß beim organofunktionellen Silan der allgemeinen Formel II R'' γGlycidoxypropyl oder 3-Methacryloxypropyl ist.

9. Verfahren nach Anspruch 8,
dadurch gekennzeichnet, daß das organisch vernetzbare organofunktionelle Silan der allgemeinen Formel II γGlycidoxypropyltrimethoxysilan oder 3-Methacryloxypropyltrimethoxysilan ist.

10. Verfahren nach mindestens einem der Ansprüche 1 bis 9,
dadurch gekennzeichnet, daß N-2-Aminoethyl-3-aminopropyltrimethoxysilan oder Aminopropyltriethoxysilan oder Diethylentetramin als Härter eingesetzt wird.

11. Verfahren nach mindestens einem der Ansprüche 1 bis 10,
dadurch gekennzeichnet, daß die Schicht(en) bei Raumtemperatur gehärtet wird/werden.
